# EUROPEAN PATENT APPLICATION

(11) **EP 4 201 513 A1**
(43) Date of publication of application: **28.06.2023**
(21) Application number: 21383194.4
(22) Date of filing: 22.12.2021
(51) Int. Cl.: B01J 20/12, B01J 20/34, B01J 20/30, C11B 3/10, C11B 13/04

(54) **ADSORBENT COMPOSITION COMPRISING A BLEND OF BLEACHING EARTHS**

(71) Applicant: Clariant International Ltd, 4132 Muttenz (CH)
(72) Inventor: CELINSKI, Vinicius Ribeiro, 80686 München (DE); RODRIGUEZ GAYA, Carlos, 45210 Yuncos (ES); HERRERO HERNANDEZ, Jorge, 45210 Yuncos (ES); TORIBIO GARCIA, Montserrat, 45213 Palomeque (ES); HARTMANN, Timo, 85221 Dachau (DE); MOLINA OJEDA, Ruben Francisco, 43850 Cambrils (ES); NAVAS ROJO, David, 43382 Maspujols (ES)
(74) Representative: Silber, Anton

(57) **Abstract**

The present invention concerns an adsorbent composition comprising a blend of virgin bleaching earth (VBE) and de-oiled bleaching earth (DOBE), a method for its manufacturing as well as its use as an adsorbent, *i.a.,* in oil and fat purification.

## Description

The present invention concerns an adsorbent composition comprising a blend of bleaching earth materials, in particular a blend of a virgin bleaching earth (VBE), including naturally activated and acidic activated bleaching earths, and a de-oiled bleaching earth (DOBE), a method for producing the blend as well as its use as an adsorbent, especially in oil purification.

Oil refining implies multiple physical and chemical processes to remove oil impurities such as color bodies, oxidation agents or contaminants that make it not suitable for its commercialization or use in other applications. In order to remove these compounds, bleaching earths are used as adsorbent in the so-called bleaching process, where contaminants are bound on the bleaching earth's high surface. After bleaching, the bleaching earth-oil mixture is separated by filtration using filters resulting in a bleached oil ready for deodorization, and a waste spent bleaching earth saturated with oil that is considered a waste that typically ends up in landfill.

The large volume of spent bleaching earth generated in the edible oil industry is one of the main challenges refineries face in terms of costs, safety, and sustainability, since the self-ignition nature of the spent bleaching earths limits the number of applications, and requires special conditions for their disposal.

Triggered by new legislations that are looking to promote the use of waste feedstocks, e.g., in renewable diesel production, the oil refining industry is shifting the way spent bleaching earth is handled, considering the remaining oil as a valuable resource that can be recovered and improve the sustainability in their operations.

In order to recover the oil in spent bleaching earth, oil refineries and waste managers are building oil-extraction plants to recover part of the valuable oil but still are ending up with another residue typically referred to as de-oiled bleaching earth (DOBE) which is so far considered to be waste, that similarly to spent bleaching earth ends in landfills, limiting the economic feasibility of oil extraction with a reduced environmental impact. Therefore, there is a need to find applications for de-oiled bleaching earth in an economical and environmentally friendly manner.

It is an objective of the present invention to provide a new adsorbent based on de-oiled bleaching earth and its use in oil purification and filtration so that the shortcomings of the prior art approaches are overcome. Although the examples described with respect to the present invention refer to edible oils like olive oil, rapeseed oil, palm oils, or to waste oils like used cooking oil and animal fat, the adsorbent of the invention can be equally used in other oil feedstocks including all types of edible oils, waste oils, technical oils and pyrolysis oils.

In particular, the present invention solves the problems of disposing de-oiled bleaching earth into landfill or secondary waste uses, offering a more sustainable circular approach, where a mix of virgin bleaching earth and de-oiled bleaching earth can be used for oil refining. It also improves raw clay mine lifetime, operating costs, and environmental footprint by reducing the amount of fresh (also called: virgin) bleaching earth necessary to produce a finished product, such as the adsorbent composition of the present invention.

This and other objectives of the invention are solved by the subject matter of the independent claims. Further and preferred embodiments of the invention are the subject matter of the dependent claims.

A first object of the invention is an adsorbent composition comprising a blend of a virgin bleaching earth (VBE) and a de-oiled bleaching earth (DOBE). In the context of the present invention, a blend of VBE and DOBE is any physical mixture of these bleaching earth types. Such physical mixtures can be prepared during one or more of the various general steps of traditional bleaching earth production processes. General steps can be physical or chemical activation, milling and drying to optimize porosity, surface polarity, particle size and water content with the goal of optimizing the performance of the material regarding not only impurity removal but also processability. Therefore, a physical mixture of VBE and DOBE can be prepared prior to physical and/or chemical activation steps (if any) to adjust porosity and surface polarity, during milling and/or drying to adjust particle size distribution and water content and/or as end products consistently accounting for a homogeneous mixture of the materials. In other words, in the context of the present invention, DOBE can be treated similarly as (virgin) raw clays as a raw material.

In particular, the DOBE can be used as a starting material jointly with fresh, virgin bleaching earth materials to arrive at the adsorbent composition of the invention. In the context of the present invention, a de-oiled bleaching earth (DOBE) is the solid material obtained after de-oiling (and optionally further processing such as thermal and chemical treatment) a spent bleaching earth (SBE), e.g. after prior use in vegetable or other edible oil refineries or from use in connection with industrial oil sources, such as renewable fuel refineries

De-oiling methods removing major parts of the oil adsorbed onto bleaching earth after it suse are widely known in the art and include multiple steps that mainly differ by the extraction conditions, in particular the solvent, used. Hexane is the most common extraction solvent (cf. e.g. US6780321B2) and is preferred in the context of the invention, but other extraction solvents like strong acids (cf. e.g. A. Boukerroui, M. Ouali, Chemical Technology and Biotechnology, V. 75, Issue 9 (2000), 773-776), sub-critical water (cf. e.g. R. A. Fattah, N. A. Mostafa, M. S. Mahmoud, W. Abdelmoez, Proceeding of the 7th ICEE Conference 27-29 (2014)), supercritical carbon dioxide (cf. e.g. W. A. Oladosua, Z. A. Manan, S. R. W. Alwi, Chemical Engineering Transactions, 56 (2017), 133-138) and methanol (cf. e.g. J. Naser, O. P. Avbenake, F. N. Dabai, B. Y. Jibril, Waste Management, 126 (2021), 258-265) are known in the art and are suitable as well for the present invention.

In addition, further processing of de-oiled bleaching earth is possible in the context of the present invention, including thermal treatment (cf. e.g. A. Merikhy, A. Heydari, H. Eskandari, F. Ghahraman-Rozegar, Chemical Engineering and Processing - Process Intensification, 158 (2020), 108167) or steam blowing (cf. e.g. L. S. Kheang, C. S. Foon, C. Y. May, M. A. Ngan, Am. J. Appl. Sci., 3 (10) (2006), 2063-2067, 2006).

Depending on the de-oiling method and conditions applied to the SBE, a DOBE can be produced having a residual oil content ranging from <1 to approximately 23wt%. Typical ranges of oil content for SBE are above 23wt% (or even more) and for DOBE in the range of 1-23wt%. For example, steam blowing is often applied in de-oiling SBE in edible oil refineries reaching around the upper end of residual oil content (~23wt%), while solvent extraction in an extra step is able to reach the lower end (below 10wt% or even below 1wt%).

Both, the extraction method and the post-treatment of de-oiled material, if applied, affect the properties and characteristics of the de-oiled bleaching earth, in particular with respect to its particle size and shape, surface area and the pore volume. Often enough the goal of de-oiling is to reach surface areas and pore volumes close to the ones of the respective VBE, while controlling the particle size distribution that secures impurity removal and processability under common refining conditions. This is often shown by comparing not only characterization, but also bleaching activity (e.g. color removal) in various edible oils.

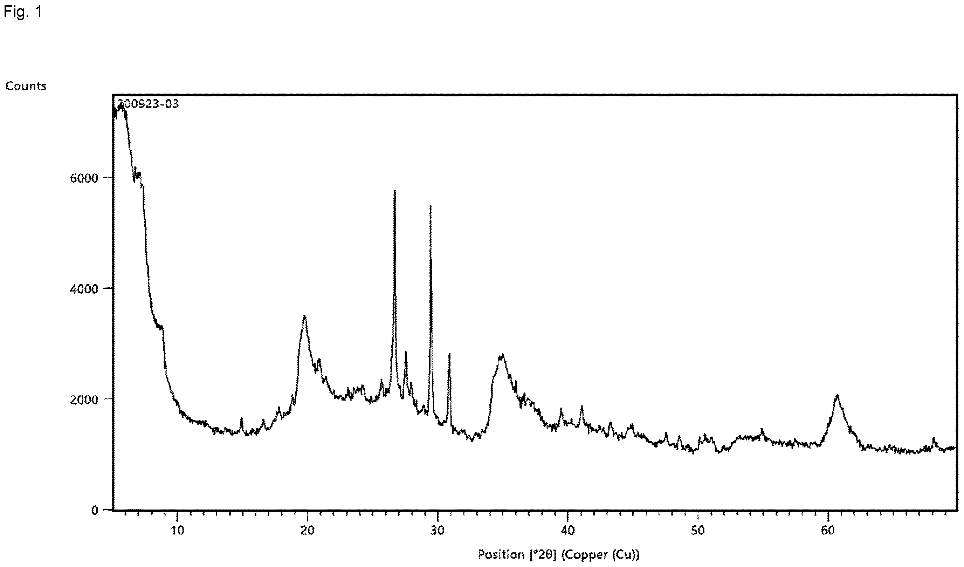

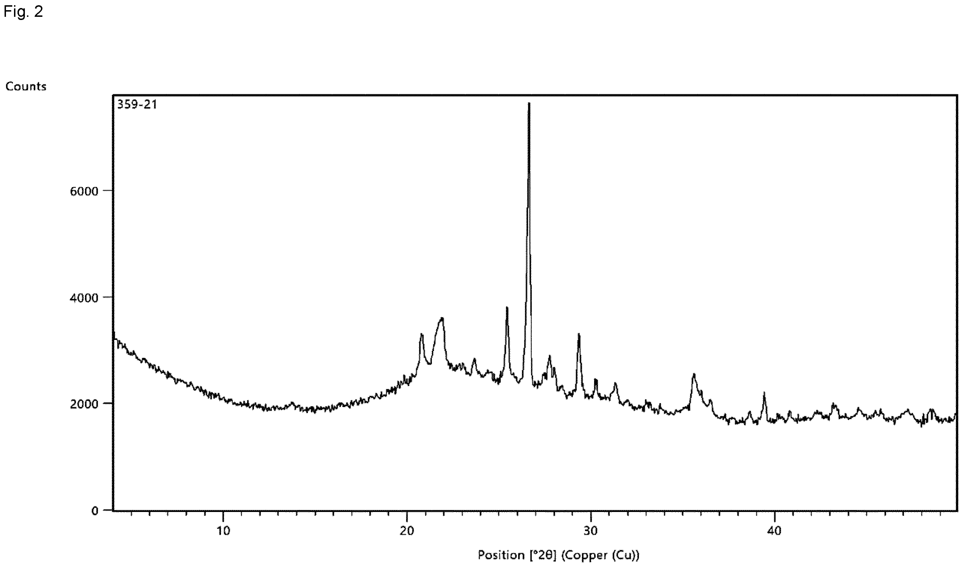

For the adsorbent composition of the present invention, the DOBE can be any DOBE obtained after SBE extraction, with or without post-treatment. Preferably, the extraction method uses a solvent and process conditions that do not fundamentally alter the original crystalline structure of the mineral that is the basis for the bleaching earth. Surprisingly, an amorphous DOBE can still be used for the purpose of the invention, if it still comprises useful characteristics of an adsorbent as long as humidity, pore and particle size distribution are maintained as described above. The X-ray powder diffractogram (using a Cu anode) shown in Figure 1 indicates reflexes at 2θ-angles below 20° and is an example of a DOBE still featuring a, for a person skilled in the art, commonly observed crystal structure of a disordered layered material. The X-ray powder diffractogram (using a Cu anode) shown in Figure 2 indicates nearly no reflexes at 2θ-angles below 20° and is an example of an amorphous DOBE. Reflexes above 20° belong to side phases not known for their adsorptive properties. The DOBE in both cases originates from a natural active bleaching earth (Tonsil Standard 575) that has been used in edible oil bleaching and was de-oiled by organic solvent extraction.

SBE extraction using supercritical CO₂ or organic solvents such as hexane, or a blend of solvents, with low boiling temperature, fast evaporation, low surface tension and high stability is preferred. In case post treatment is necessary, post-treatment using a minimum number of steps and consumes as little energy as possible, such as mild activation with chemicals such as mineral and organic acid, or calcination at lowest possible temperature, is preferred. Apart from de-oiling no further post-treatment is desirable to avoid further chemicals and energy consumption.

The typical specifications of a DOBE suitable for the present invention can be found in Table 1.

| Table 1 | Total organic content (%) | Bulk Density (g/L) | Moisture (%) | pH | Free acidity (mg KOH/g) | Particle size distribution DSR 63 µm | Surface area (m²/g) | Pore size (ml/g) 0-80 nm |
|---|---|---|---|---|---|---|---|---|
| DOBE | 1-12 | 550 - 650 | 5-15 | 6-7 | 0-4 | 15-25 | 40 - 60 | < 0,1 |

In the context of the present invention, a virgin bleaching earth (VBE) is a conventionally produced bleaching earth, produced by crushing, grinding, drying, milling and optional other intermediary activation processes, including wet and dry methods using weak and strong acids, applied to raw clay from mine deposits.

Suitable types of VBE include naturally activated bleaching earth (NABE, such as e.g. Tonsil^{®} Standard 575, obtainable from Clariant Produkte (Deutschland) GmbH), dry modified acid-activated bleaching earths (DMBE, such as e.g. Tonsil@ Optimum 278FF, obtainable from Clariant Produkte (Deutschland) GmbH), surface modified bleaching earths (SMBE, such as e.g. Tonsil@ Supreme 112FF, obtainable from Clariant Produkte (Deutschland) GmbH), and high performance bleaching earths (HPBE, such as e.g. Tonsil@ Supreme 114FF, obtainable from Clariant Produkte (Deutschland) GmbH), and mixtures of two or more of these types of VBE. Such types of VBE are generally known in the art and are commercially available, e.g. from Clariant Produkte (Deutschland) GmbH, in a wide variety of grades and for different applications.

The main difference between each type of VBE can be found in their bleaching activity and physical parameters. NABEs are produced only by physical processing and are pH neutral. DMBE are chemically modified with weak acids (such as citric acid). SMBE are chemically activated using strong acid (such as concentrated mineral acid, e.g. sulfuric acid or hydrochloric acid) to modify significantly their surface for higher activity. HPBE are completely activated earths chemically activated with a strong acid in a reactor to significantly modify mineral structure and obtain the highest activity.

The use of one type or another, including its blend(s), is mainly defined by the type of oil to be refined and the desired specifications of the process, being NABEs used for more easy-to-bleach oils or oils that are susceptible to underside side reactions that might occur with acidic clays such as palm oil, while DMBE is also suitable for easy-to-bleach oils like sunflower oil, and SMBE and HPBE are more suitable for difficult-to-bleach oils like rapeseed, soybean and waste oils such as animal fat or used cooking oil.

In one embodiment of the invention the adsorbent material comprises a mixture of different DOBE and/or a mixture of different VBE. This allows adjusting the final properties of the adsorbent.

The adsorbent composition of the present invention preferably comprises 5 % to 95% (w/w) of DOBE and 5% to 95% (w/w) of VBE. Preferably, the adsorbent composition contains between 10 to 40% (w/w) of DOBE and 60 to 90% VBE to obtain an adsorbent formulation with good adsorption capacity and enhanced filtration performance as shown in experimental laboratory studies in the present invention.

In one embodiment of the invention, both the DOBE and VBE are from the same basic type of bleaching earth, i.e. NABE, DMBE, SMBE and HPBE. It is also possible to mix different basic types of bleaching earths to arrive at the adsorbent of the invention, e.g. DOBE from NABE and VBE from DMBE etc.

A further influencing factor for the performance of the adsorbent of the present invention is the history or prior use of the DOBE. DOBE stemming from treatment of difficult-to-bleach oils can contain more impurities (e.g. metals and color bodies) that might reduce the uptake performance of metals.

The new adsorbent composition provides good adsorption capacity and filtration as proven in the Examples 1, 2 and 3, due to the regeneration of the adsorption and filtration properties of DOBE when blended with VBE.

In case only DOBE is used for the same application, the material tends to granulate, especially depending on the degree of de-oiling, making its handling difficult and a homogeneous mix between oil and bleaching earth is not achieved, thus reducing bleaching efficiency. When blended with VBE, material desegregates, and surface is more available for enhanced bleaching performance. Using activated bleaching earth grades such as SMBE and HPBE as the VBE in the adsorbent composition of the invention, synergies are also observed with DOBE since it provides a faster filtration rate to the new adsorbent. The benefits are less significant with DOBE content lower than 10% (w/w) or higher than 90%, the latter leading to particle granulation and comparably low performance.

The adsorbent of the invention preferably has a particle size distribution (PSD) featuring typical dry sieve residue values of 20-40% on a 63 µm mesh and 40-65% on a 25 µm mesh as well as typical values of water content (humidity or moisture content) of 8-25wt% (g water/g solid material). The PSD and the water content of the DOBE and VBE that are blended to form the adsorbent of the invention ideally are in similar or identical ranges as the values of the resulting blend, but it is also possible to blend a DOBE with higher values with a VBE with lower values in appropriate amounts to arrive at the desired values of the resulting adsorbent, and vice versa.

A further object of the invention is the use of the adsorbent composition of the invention as adsorbent, for different types of feedstock such as circular feedstocks, and preferably in renewable feedstock applications, such as biodiesel or renewable diesel from edible oils, used cooking oil, animal fat, distillers corn oil, palm oil mill effluent, SBE oil, palm fatty acid distillate and other non-food or non-feed applications such as mineral oil treatment, plastic recycling or bioplastic production, including technical oil and pyrolysis oil applications, e. g in connection with bioplastics or chemical recycling from used cooking oil, feedstocks from pyrolysis of plastics, biomass, tires etc. The adsorbent composition of the invention can also be used as an adsorbent in edible oil applications, although such uses are less preferred.

The adsorbent of the invention can also be used as a filter aid in different applications, including edible and renewable or circular oil refining.

Another object of the invention is a method of producing the adsorbent composition of the invention, comprising blending a virgin bleaching earth (VBE) with a de-oiled bleaching earth (DOBE).The method comprises blending DOBE with the VBE to obtain a homogeneous material, e.g. by using a blending station that consists of containers (e.g., silos) for storing DOBE and VBE, a blender, e.g., a closed vessel with a centered infinite screw where DOBE and VBE are fed and mixed along the axial direction of the blender according to required compositions and formulations, and a final container (e.g. silo) where the adsorbent composition of the invention is collected and stored. As stated above, in the context of the present invention, blending and mixing should be understood as synonyms.

The blender and the final container are optional since material could be blended inline from material storage containers and either sent to final container, loaded in bulk, or used directly in a refinery consuming bleaching earth.

DOBE and VBE have not necessarily to be stored in initial containers such as silos, but such storing provides benefits regarding control on blend specifications and quality for the adsorbent production of the invention.

The addition of the DOBE to the VBE in general can be done at any time during the production process. In one embodiment, the VBE is first produced from its raw materials, e.g. by drying, milling and - if applicable - activating the raw clay, and then add the DOBE.

Preferably, blending of the VBE and the DOBE are controlled to achieve desired PSD and humidity of the final adsorbent product.

In one embodiment, the DOBE is pre-treated before it is mixed with the VBE in a way that its physical-chemical properties are similar to those of the raw clay material of the VBE so that DOBE and VBE raw clay can be blended and then processed (e.g. by drying, milling, activating) to achieve the adsorbent of the present invention.

In another embodiment, the DOBE is pre-treated before it is mixed with the VBE in a way that its physical-chemical properties are similar to those of the VBE so that both materials can be treated in similar ways when producing the VBE/DOBE blend of the invention.

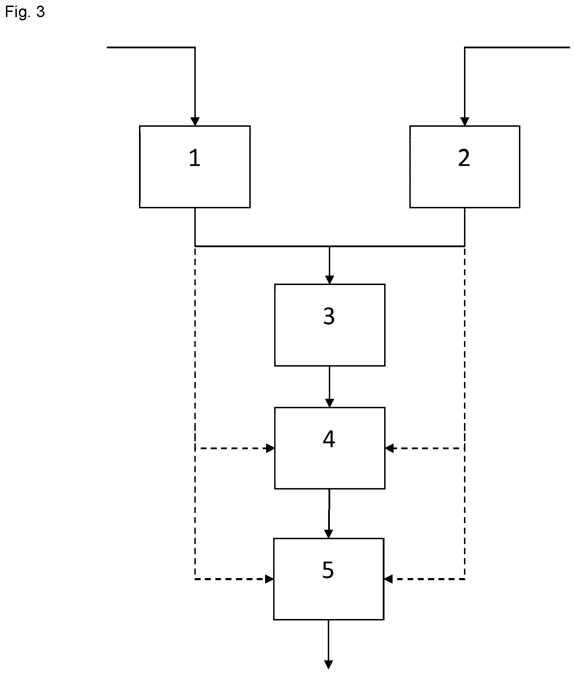

Figure 3 shows a schematic view for possible production methods of the adsorbent of the invention, showing main producing steps with solid lines and optional production method steps with dashed lines.

Figure 3 shows a schematic view of a production method of the adsorbent of the invention. The upper left arrow indicates the addition of DOBE into a transport means (1), e.g. a first belt conveyor. The upper right arrow indicates the addition of VBE into a transport means (1), e.g. a second belt conveyor. Both the DOBE and VBE are transported to a grinding means (3) where they are grinded and mixed and then subsequently transported to an activation means (4), e.g. a vessel for acid treatment. The grinded and activated mix of VBE and DOBE is the transported to a milling means (5) that can also serve for drying. The final product, i.e., the adsorbent of the invention, can then be taken from there.

Depending on the nature and pre-processing status of the VBE and/or the DOBE, alternative routes are possible, as indicated by the dashed lines. E.g., the VBE can be entered into the grinding means (3) whereas the DOBE can first be entered into activation means (4) or even only at the milling means (5) where the final mixing and optional drying of DOBE and VBE is done to arrive at the adsorbent of the invention.

In a further alternative flow via the dashed lines/arrows in Figure 3, the DOBE can be entered into the grinding means (3) whereas the VBE can first be entered into activation means (4) or even only at the milling means (5) where the final mixing and optional drying of DOBE and VBE is done to arrive at the adsorbent of the invention.

It is also possible that neither DOBE nor VBE are entering the grinding means (3) but that one or both of them are first brought into the activation means (4) or into the milling means (5) where the final mixing and optional drying of DOBE and VBE is done to arrive at the adsorbent of the invention.

Figure 3 also shows a schematic view of an alternative production method of the adsorbent of the invention. The upper left arrow indicates the addition of DOBE into a container (1), e.g. a first silo. The upper right arrow indicates the addition of VBE into a container (2), e.g. a second silo. Both the DOBE and VBE are transported to a blender (3) where they are mixed and then subsequently transported to a further container (4), e.g. a third silo, for intermediate storage. The final product, i.e., the adsorbent of the invention, can then be taken from container (4).

Following the alternative flow via the dashed lines/arrows in Figure 3, in an alternative embodiment of the method of the invention DOBE and VBE can be transported from their respective containers (1, 2) directly to container (4), i.e., without using a specific blender. Mixing of VBE and DOBE is here achieved by simultaneous filling of container (4), from which the final product can be taken.

In a further alternative flow via the dashed lines/arrows in Figure 3, in a further alternative embodiment of the method of the invention DOBE and VBE can be transported from their respective containers (1, 2) directly to their ultimate usage destination, i.e., without using a specific blender or (intermediate) container. Mixing of VBE and DOBE is here achieved by simultaneous dispensing the final product.

### EXAMPLES

The invention and its benefits will further be explained by the following experimental examples.

VBE were prepared by grinding, drying, milling and activating different raw clays in order to replicate industrial scale process to achieve the typical specification for each VBE type presented in Table 2.

| Table 2 VBE Type | Bulk density (g/l) | Free moisture (%) | pH | Particle size < 63 µm (%) |
|---|---|---|---|---|
| NABE | 570 | 6,4 | 8,0 | 21 |
| DMBE | 600 | 12 | 6,7 | 21 |
| SMBE | 340 | 10 | 3,0 | 25 |
| HPBE | 560 | 9 | 4,3 | 29 |

Then, where applicable, DOBE is added after final VBE activation and mixed to obtain a homogeneous composition.

DOBE samples were obtained from different bleaching earths (NABE (Tonsil@ Standard 575), SMBE (Tonsil@ Supreme 112FF), HPBE (Tonsil@ Supreme 114FF)) that have been used in a conventional edible oil bleaching process and have been collected from the filter cake of such process. Residual oil from the filter cake was extracted using hexane as a solvent. The residual solid material was dried and used as DOBE. The properties of such DOBE are summarized in Table 3.

| Table 3 DOBE Type | Bulk density (g/l) | Free moisture (%) | pH | Particle size < 63 µm (%) |
|---|---|---|---|---|
| DOBE from NABE Tonsil@ Standard 575 | 550 | 12,1 | 6,8 | 30 |
| DOBE from SMBE Tonsil@ Supreme 112 FF | 480 | 14,2 | 4,3 | 37 |
| DOBE from HPBE Tonsil@ Supreme 114 FF | 500 | 13,5 | 3,7 | 32 |

Bleaching earth performance was determined by the capacity of removing color bodies and metals and other contaminants in the different oils and animal fats. Generally, refining process involves pre-treatment (in some cases), bleaching, filtration and deodorization process that varies depending on the raw oil to be refined.

The bleaching process consists of filling 100 g of crude oil in a round-bottom three-neck flask connected with a stirring rod, a thermometer, and vacuum system. The flask is on top of an electrical heating mantle that is controlled with the thermometer inside, while the vacuum is generated connecting a three-valves line that is connected to the water-jet vacuum pump.

When pretreatment is necessary (here: for palm oil and used cooking oil), acid is added into the oil to hydrate some of the non-hydratable phosphatides and other substances for an efficient bleaching step, the acid-oil mixture is heated up and stirred under vacuum during specific period of time according to the oil requirements in Table 4 below.

| Table 4 Pretreatment | Olive oil | Rapeseed oil | Palm oil | Used Cooking Oil | Animal Fat |
|---|---|---|---|---|---|
| Acid type | - | - | Phosphoric | Citric | - |
| Dosage (%w/w) | - | - | 1,2 | 0,7 | - |
| Temperature (ºC) | - | - | 100 | 80 | - |
| Pressure (mbar) | - | - | 30 | atm | - |
| Time (min) | - | - | 15 | 10 | - |

Then, bleaching step is done by adding bleaching earth in the oil, heating up the oil and stirr under vacuum for the required time according to the requirements in Table 5. Once bleaching is finished, for separating the waste bleaching earth from the oil, the oil/earth suspension is filtered using a vacuum Büchner funnel standard system.

| Table 5 Bleaching | Olive oil | Rapeseed oil | Palm oil | Used Cooking Oil | Animal Fat |
|---|---|---|---|---|---|
| BE dosage (%) | 0,5 | 0,5 | 1,2 | 1,0 | 1,0 |
| Temperature (ºC) | 95 | 110 | 100 | 100 | 100 |
| Pressure (mbar) | 30 | 30 | 30 | 100 | 100 |
| Time (min) | 30 | 30 | 30 | 30 | 30 |

If the oil requires further refining (olive, rapeseed, and palm oils), the filtered oil is added in a deodorizer to remove more volatile compounds like free fatty acids that still have an impact on color and oil characteristics. The deodorizer consists on a round-bottom three-neck flask that incorporates a distillation column with a water inlet on top, the column outlet is connected with three vapor traps connected inline that collect the distillated substances. Each of the trap is submerged in a Dewar flask that is filled with dry ice to condense the vapors.

The oil is heated up in the deodorizer, water is constantly added, and vacuum is started, once the oil reaches the required temperature, it starts the deodorization during the specified time in the Table 6.

| Table 6 Deodorization | Olive oil | Rapeseed oil | Palm oil | Used Cooking Oil | Animal Fat |
|---|---|---|---|---|---|
| Temperature (ºC) | 240 | 240 | 240 | - | - |
| Pressure (mbar) | < 1 | < 1 | < 1 | - | - |
| Time (min) | 60 | 40 | 90 | - | - |

After deodorization, the decolorized and bleached oil is collected to evaluate oil characteristics based on red color units and chlorophyl A.

In the case of only bleached oil (used cooking oil and animal fat), the bleached oil is collected to evaluate oil characteristics based on heavy metal content.

For evaluating filtration behaviors of bleaching earths, a method was designed to replicate industry filtration conditions. The method uses a stainless-steel pressure filtration unit (No. 16249 from Sartorius), heated at 80ºC with a wristband with integrated temperature sensor (PT-100 from Horst) and a temperature controlled (LTR 3500 Juchheim Solingen). The reactor is operated under positive pressure using nitrogen with a pressure reducer controlled with a manometer. Filter cloth consists of a glass fiber filter (GF/F 047mm)

Then, three bakers with 100g of crude oil are heated up to 96,5ºC in a bath, 2g of bleaching earth was added in each baker and after complete sedimentation the mixture was stirred for 10 min. After mixing, one of the bakers was taken out and quickly transferred into the filter reactor, then pressure was open, and time was measured when oil started to filter until it finished, representing the pre-coating process (T1).

Then, without taking out the generated spent earth, pressure is stopped, and the second beaker was added to repeat same process considering there is still a cake formed (T2). Finally, process is repeated with last baker once the final cake is formed (T3) to complete the test.

The following analytical methods have been used:
To determine color values (Red Color Units) and Chlorophyl A (ChI. A), spectroscopic colorimeter (Lovibond model PFX 990) using AF 950 RY scale and ChI. A scale. Oil sample was added in required size cuvette (5 ¼ for red color units and 10mm for ChI. A), introduced into colorimeter, set the optical path distance to cuvette size, and measured each of the parameters by light spectroscopy.

Metals and other contaminants like phosphorus () in the bleached oil are determined by calibrated Inductively Coupled Plasma (ICP) spectroscopy. Samples are prepared blending the oil with kerosene and an internal standard with the same ratio. Then, the samples are injected in the ICP for concentration measurement that together with concentration ratio used in calibration and weight of the sample, final results are obtained.

Bulk density was determined under a normal fill, without pressing or shaking the material. Approximately 250 g of air-dry material is shaken in a 1000 ml container for one minute so that the sample will no longer contain any mechanically compacted particles. The measuring cylinder which has been cut at the 100 ml graduation is weighed (empty weight) and placed under the powder funnel which is fixed at the stand (distance appr. 2 cm). After the stopwatch is started, the measuring cylinder is filled within a period of 15 seconds with the ventilated material of the 1000 ml container. While the stopwatch continues to run (total period: 2 minutes) the same quantity of material is refilled so that the cylinder is always filled slightly supernatant. Subsequently, the supernatant material is taken from the top edge of the measuring cylinder by a spatula. Care has to be taken so that the material will not be subject to any press forces. The filled measuring cylinder is cleaned by using a brush and is weighed.

Free moisture is the amount of water (%w/w) contained in the adsorbents determined at 105 °C according to DIN/ISO-787/2.

pH is determined form a 10 wt.-% slurry of the clay material in distilled water which is heated to the boiling point and then cooled to room temperature under a nitrogen atmosphere. The pH-value is determined with a calibrated glass-electrode.

Specific surface was measured by the BET-method (single-point method using nitrogen, according to DIN 66131) with an automatic nitrogen-porosimeter of Micrometrics, type ASAP 2010. The pore volume was determined using the BJH-method (E.P. Barrett, L.G. Joyner, P.P. Hienda, J. Am. Chem. Soc. 73 (1951) 373).

Pore volumes of defined ranges of pore diameter were measured by summing up incremental pore volumina, which were determined from the adsorption isotherm according BJH. The total pore volume refers to pores having a diameter of 2 to 350 nm.

Free fatty acid content is determined by weighing 2 g of the oil sample into a 250 ml Erlenmeyer flask. The oil is dissolved by adding 50 ml of a 1:1-mixture of methanol and diethylether and mixed with a few drops of an indicator solution (alkali blue, color change of colorless green to yellowish red). With 0.1 n / 0.02 n sodium hydroxide the solution is titrated until the point of color change.

The peroxide value (POV) indicates the content of oxygen bound as peroxide for the particularly investigated oil. With this value the oxidative (pre-)load of the oil can be determined. Peroxides present in the oil will oxidize iodide to iodine which is subsequently determined by titration with a thiosulfate solution (in analogy to DGF method F-I 3b (84)).

### Example 1:

The following example shows the use of the adsorbent composition of the invention in edible oil purification using different types of VBE and DOBE. The samples were prepared following the blending method described above using different types of VBE (i.e., NABE (Tonsil@ Standard 575), DMBE (Tonsil@ Optimum 278FF), SMBE (Tonsil@ Supreme 112FF), HPBE (Tonsil@ Supreme 114FF), all available from Clariant Produkte (Deutschland) GmbH) with DOBE (from NABE, cf. Table 3), then the comparison was made between the blends versus a NABE and versus the DOBE without blending. Table 6 shows the composition and main parameters of each of tested samples. Samples 1 to 4 are according to the invention, samples 5 and 6 are comparative samples.

| Table 7 Sample | Composition | Bulk density (g/l) | Free moisture (%) | pH | Particle size < 63 µm (%) |
|---|---|---|---|---|---|
| Sample 1 | 75% NABE: 25% DOBE | 590 | 8,4 | 6,9 | 22 |
| Sample 2 | 75% DMBE: 25% DOBE | 590 | 12,0 | 5,8 | 21 |
| Sample 3 | 75% SMBE: 25% DOBE | 410 | 11,0 | 4,5 | 20 |
| Sample 4 | 75% HPBE: 25% DOBE | 540 | 8,8 | 4,8 | 28 |
| Sample 5 | 100% NABE | 570 | 6,4 | 8,0 | 21 |
| Sample 6 | 100% DOBE | 650 | 12,6 | 6,3 | 13 |

The adsorbent samples of table 7 have been used in an oil purification process, consisting of pre-treatment, bleaching, filtration and deodorization as described above. The tests were carried out on different common edible oil feedstocks with the specifications in Table 8 using the conditions presented in Tables 4-6.

| Table 8 Crude oil type | Red color units (5 ¼") | ChI. A (ppm) | Free fatty acids (%) | Peroxides index (meq/kg) |
|---|---|---|---|---|
| Olive | 17,1 | 5,00 | 4,2 | 12,2 |
| Rapeseed | > 20,0 | 3,40 | 0,4 | 8,6 |
| Palm | > 20,0 | 0,35 | 5,6 | 0,6 |

The results obtained using the analytical methods described above are shown in Table 9.

| Table 9 | Olive oil | | Rapeseed oil | | Palm oil |
|---|---|---|---|---|---|
| | Red color units | Chl. A (ppm) | Red color units | ChI. A (ppm) | Red color units |
| Sample 1 | 4,4 | 1,8 | 2,0 | 0,9 | 3,3 |
| Sample 2 | 4,2 | 1,8 | 1,1 | 0,3 | 3,6 |
| Sample 3 | 2,2 | 0,3 | 1,0 | 0,1 | 2,9 |
| Sample 4 | 2,9 | 0,7 | 1,1 | 0,2 | 3,0 |
| Sample 5 | 4,5 | 2,0 | 1,6 | 0,8 | 3,4 |
| Sample 6 | 6,2 | 2,5 | 3,0 | 1,5 | 4,6 |

As can be seen from Table 8, the blend of DOBE with different types of VBE (NABE, DMBE, SMBE or HPBE), results in improved purification performance in comparison with using only a NABE or DOBE alone. The use of DOBE blend with natural and active bleaching earth grades as VBE surprisingly does not compromise product bleaching performance. On the contrary, compared to pure NABE and pure DOBE it actually delivers a superior performance.

### Example 2:

The following example concerns the use of the adsorbent composition of the invention in oil purification using different amounts of VBE (SMBE (Tonsil@ Supreme 112FF)) and DOBE. The samples were prepared following blending method descripted above using SMBE with DOBE at different compositions, and then the comparison was made between the blends versus a NABE and versus the DOBE without blending. Table 10 below shows the composition and main parameters of each of tested samples. Samples 7 to 10 are according to the invention, samples 11 and 12 are comparative samples.

| Table 10 | Composition | Bulk density (g/l) | Free moisture (%) | pH | Particle size < 63 µm (%) |
|---|---|---|---|---|---|
| Sample | | | | | |
| Sample 7 | 90% SMBE: 10% DOBE | 370 | 10,5 | 3,3 | 25 |
| Sample 8 | 75% SMBE: 25% DOBE | 410 | 11,0 | 4,5 | 25 |
| Sample 9 | 50% SMBE: 50% DOBE | 500 | 11,5 | 5,0 | 24 |
| Sample 10 | 20% SMBE: 80% DOBE | 590 | 12,1 | 5,6 | 23 |
| Sample 11 | 100% SMBE | 350 | 10,0 | 3,0 | 25 |
| Sample 12 | 100% DOBE | 650 | 12,6 | 6,3 | 22 |

The adsorbent samples of table 9 have been used in a renewable fuel oil purification process involving pre-treatment, bleaching and filtration processes described above. The tests were carried out on different oil feedstocks with the specifications in Table 11 using the conditions presented in Table 4. Only phosphorous (P), calcium (Ca), iron (Fe), potassium (K), magnesium (Mg) and sodium (Na) are presented here since these are the most relevant metals for such an application.

| Table 11 | Metal and other contaminant content (ppm) | | | | | |
|---|---|---|---|---|---|---|
| Crude oil type | | | | | | |
| | P | Ca | Fe | K | Mg | Na |
| Used cooking oil | 10,9 | 5,5 | 13,5 | 5,9 | 0,7 | 10,3 |
| Animal fat | 56 | 0,05 | 0,04 | 6,8 | 0,04 | 13,2 |

The results after bleaching used cooking oil and animal fat are presented in Table 12 and 13 respectively.

| Table 12 | Metal and other contaminant content (ppm) | | | | | |
|---|---|---|---|---|---|---|
| Used cooking oil | | | | | | |
| | P | Ca | Fe | K | Mg | Na |
| Sample 7 | 5,0 | 2,3 | 6,6 | 0,79 | 0,41 | 2,3 |
| Sample 8 | 4,5 | 2,1 | 5,6 | 0,84 | 0,71 | 2,5 |
| Sample 9 | 5,7 | 2,8 | 6,4 | 0,93 | 0,79 | 3,0 |
| Sample 10 | 5,8 | 2,8 | 6,7 | 1,37 | 0,79 | 4,7 |
| Sample 11 | 3,9 | 1,9 | 5,2 | 0,49 | 0,34 | 1,7 |
| Sample 12 | 5,9 | 2,6 | 6,9 | 1,81 | 0,79 | 6,5 |

| Table 13 | Metal and other contaminant content (ppm) | | | | | |
|---|---|---|---|---|---|---|
| Animal fat | | | | | | |
| | P | Ca | Fe | K | Mg | Na |
| Sample 7 | 23,2 | < 0,05 | < 0,04 | < 0,04 | 0,80 | 3,1 |
| Sample 8 | 27,7 | < 0,05 | < 0,04 | < 0,04 | 2,50 | 3,4 |
| Sample 9 | 32,7 | < 0,05 | < 0,04 | < 0,04 | 3,52 | 3,6 |
| Sample 10 | 40,0 | 0,20 | < 0,04 | < 0,04 | 4,40 | 4,0 |
| Sample 11 | 20,9 | < 0,05 | < 0,04 | < 0,04 | 0,22 | 3,1 |
| Sample 12 | 41,7 | 0,34 | < 0,04 | < 0,04 | 6,30 | 4,2 |

As it is presented in the results, the adsorbent composition of the present invention at different ratios, results in improved heavy metal adsorption if compared with DOBE alone. Results with VBE SMBE are slightly better than those obtained when using 25% DOBE in an adsorbent composition of the invention, but the adsorbent compositions of the invention still achieve requirement for such application.

### Example 3:

The following example concerns the use of the adsorbent composition of the present invention as filter aid in vegetable oil filtration. The samples were prepared as previously explained and tested using a three-times filtration method. The adsorbent compositions of the invention were compared with the DOBE alone and VBE SMBE. Table 14 shows the results obtained after filtration.

| | | | |
|---|---|---|---|
| Table 14 | T1 (s) | T2 (s) | T3 (s) |
| Sample 7 | 139 | 284 | 385 |
| Sample 8 | 139 | 284 | 385 |
| Sample 9 | 139 | 284 | 385 |
| Sample 11 | 152 | 289 | 405 |
| Sample 12 | 140 | 280 | 404 |

As it is presented in the results, the adsorbent compositions of the invention (samples 7 to 9) surprisingly show a reduction in filtration time in comparison with VBE SMBE (sample 11) and DOBE (sample 12), as can be observed in particular for the final filtration (T3).

## Claims

1. Adsorbent composition comprising a blend of a virgin bleaching earth (VBE) and a de-oiled bleaching earth (DOBE).

2. The adsorbent composition of claim 1, **characterized in that** the VBE is selected from the group consisting of naturally activated bleaching earth (NABE), dry modified acid-activated bleaching earths (DMBE), surface modified bleaching earths (SMBE), and high performance bleaching earths (HPBE) and mixtures thereof.

3. The adsorbent composition of any one of the preceding claims, comprising a mixture of different DOBE and/or a mixture of different VBE.

4. The adsorbent composition of any one of the preceding claims, **characterized in that** the DOBE is obtained after oil extraction from spent bleaching earth (SBE).

5. The adsorbent composition of claim 4, **characterized in that** after oil extraction the DOBE is subject to post-treatment comprising mild activation with mineral and/or organic acid and/or calcination.

6. The adsorbent composition of claim 5, **characterized in that** the SBE originates from vegetable oil or renewable fuel refineries.

7. The adsorbent composition of any one of the preceding claims, **characterized in that** the amount (w/w) of DOBE is in the range of 5% to 95% and the amount of VBE is in the range of 95% to 5%.

8. Method of producing the adsorbent composition of any of the preceding claims, comprising blending a virgin bleaching earth (VBE) with a de-oiled bleaching earth (DOBE).

9. Use of the adsorbent composition of any of claims 1 - 7 as adsorbent and/or filter aid in edible oil, circular oil or renewable oil applications

10. Use of the adsorbent composition of any of claims 1 - 7 in mineral oil treatment, plastic recycling or bioplastic production.
